# EUROPEAN PATENT APPLICATION

(11) **EP 4 624 285 A1**
(43) Date of publication of application: **01.10.2025**
(21) Application number: 25166851.3
(22) Date of filing: 27.03.2025
(51) Int. Cl.: B60T 1/00, B60T 13/74, F16D 55/226, F16D 63/00, F16D 65/18

(54) **ELECTRO-MECHANICAL BRAKE APPARATUS AND VEHICLE**

(30) Priority: 29.03.2024 CN 202410391814
(71) Applicant: Huawei Digital Power Technologies Co., Ltd., Shenzhen, Guangdong 518043 (CN)
(72) Inventor: HE, Yuhui, Shenzhen, 518043 (CN); LUO, Yuehao, Shenzhen, 518043 (CN); LI, Xianan, Shenzhen, 518043 (CN)
(74) Representative: Gill Jennings & Every LLP

(57) **Abstract**

This application provides an electro-mechanical brake apparatus (200) and a vehicle. In the electro-mechanical brake apparatus (200) provided in this application, a motor shaft (14) of a brake motor (10) is configured to rotate in one direction and drive a friction plate to brake. The motor shaft (14) includes a first section (141) and a second section (142) that are arranged in an axial direction, and a diameter of the first section (141) is greater than a diameter of the second section (142). A one-way bearing (20) is configured to be coupled to an outer circumferential surface of the first section (141) to limit rotation of the motor shaft 814) in another direction. A bearing sleeve (30) is configured to be fastened to the one-way bearing (20). A spacing base (40) is configured to limit an offset of the bearing sleeve (30) in a radial direction of the brake motor (10) and is configured to limit, via the bearing sleeve (30), rotation of the one-way bearing (20). The bearing sleeve (30) and the spacing base (40) are sequentially arranged outside the one-way bearing (20) in the radial direction of the brake motor (10). A driving piece (50) is configured to drive, via the bearing sleeve (30), the one-way bearing (20) to move from the first section (141) to the second section (142) or move from the second section (142) to the first section (141).

## Description

### TECHNICAL FIELD

This application relates to the field of vehicle technologies, and in particular, to an electro-mechanical brake apparatus and a vehicle.

### BACKGROUND

An electro-mechanical brake (electro-mechanical brake, EMB) apparatus drives a brake to brake through cooperation between a motor and a mechanical feed mechanism. The electro-mechanical brake apparatus is characterized by a simple structure, a sensitive response, stable load transfer, no hydraulic pipe, and the like, and has high transfer efficiency. In addition, the electro-mechanical brake apparatus further has a development trend of miniaturization, to adapt to wheel space of a vehicle.

### SUMMARY

This application provides an electro-mechanical brake apparatus and a vehicle. A one-way bearing is pushed to slide in a radial direction of a brake motor, to compress an axial size of the electro-mechanical brake apparatus.

According to a first aspect, this application provides an electro-mechanical brake apparatus. The electro-mechanical brake apparatus includes a brake motor, a one-way bearing, a bearing sleeve, a spacing base, and a driving piece. A motor shaft of the brake motor is configured to rotate in one direction and drive a friction plate to brake. The motor shaft includes a first section and a second section that are arranged in an axial direction, and a diameter of the first section is greater than a diameter of the second section. The one-way bearing is configured to be coupled to an outer circumferential surface of the first section to limit rotation of the motor shaft in another direction. The one direction is opposite to the another direction. The bearing sleeve and the spacing base are sequentially arranged outside the one-way bearing in a radial direction of the brake motor, and the bearing sleeve is configured to be fastened to the one-way bearing. The spacing base is configured to limit an offset of the bearing sleeve in the radial direction of the brake motor, and is configured to limit, via the bearing sleeve, rotation of the one-way bearing in the another direction. The driving piece is configured to drive, via the bearing sleeve, the one-way bearing to move from the first section to the second section or move from the second section to the first section.

The electro-mechanical brake apparatus in this application drives the friction plate via the brake motor to abut against a brake disc of a wheel, to implement braking. The motor shaft includes two sections with different diameters, and the one-way bearing slides between the two sections in the axial direction of the brake motor. When the one-way bearing slides to the first section with a larger diameter, the one-way bearing may be coupled to the outer circumferential surface of the first section, to limit rotation of the motor shaft in the another direction. Therefore, after the motor shaft rotates in the one direction and drives the friction plate to abut against the brake disc, the electro-mechanical brake apparatus in this application can limit reverse rotation of the motor shaft via the one-way bearing, to implement a parking function.

The electro-mechanical brake apparatus in this application drives, via the bearing sleeve, the spacing base, and the driving piece, the one-way bearing to slide and implement limitation on the circumferential direction of the motor shaft. The bearing sleeve and the spacing base are sequentially arranged with the one-way bearing in the radial direction of the brake motor, and the driving piece is located on a side of the bearing sleeve in the radial direction of the brake motor. An axial size of the electro-mechanical brake apparatus in this application is compressed. This helps the electro-mechanical brake apparatus adapt to wheel space.

In an implementation, an outer circumferential surface of the bearing sleeve includes a radial protrusion. In the radial direction of the brake motor, a distance between the motor shaft and an end portion that is of the radial protrusion and that is away from the motor shaft is greater than a distance between the spacing base and the motor shaft. The bearing sleeve is configured to abut against the spacing base via the radial protrusion in the another direction.

In this implementation, the bearing sleeve abuts against the spacing base via the radial protrusion extending toward the spacing base, to limit a rotation angle of the one-way bearing driven by the bearing sleeve toward the another direction in the circumferential direction of the brake motor. The bearing sleeve and the spacing base limit a relative rotation angle via a structure in the radial direction of the brake motor, so that the axial size of the electro-mechanical brake apparatus can be reduced.

In an implementation, in the radial direction of the brake motor, the distance between the motor shaft and the end portion that is of the radial protrusion and that is away from the motor shaft is greater than a distance between the driving piece and the motor shaft. In the axial direction of the brake motor, two opposite surfaces of the radial protrusion are configured to abut against the driving piece, to be driven.

In an implementation, in the radial direction of the brake motor, an end face that is of the radial protrusion and that is away from the motor shaft includes a radial groove, a distance between a groove opening of the radial groove and the motor shaft is greater than the distance between the driving piece and the motor shaft, and in the axial direction of the brake motor, two opposite groove walls of the radial groove are configured to abut against the driving piece, to be driven.

In the foregoing two implementations, the bearing sleeve abuts against the driving piece via the axial protrusion extending toward the spacing base, to accept driving of the driving piece and drive the one-way bearing to slide in the axial direction of the brake motor. The bearing sleeve and the driving piece receive driving force via a structure in the radial direction of the brake motor, so that the axial size of the electro-mechanical brake apparatus can be reduced.

In an implementation, in the radial direction of the brake motor, an inner circumferential surface of the bearing sleeve includes at least one of another radial protrusion or another radial groove. The another radial protrusion or the another radial groove is configured to be embedded in or nest an outer circumferential surface of the one-way bearing, to limit rotation of the one-way bearing in a circumferential direction of the brake motor.

In this implementation, the bearing sleeve receives the radial limiting protrusion of the one-way bearing via the another radial protrusion extending toward the one-way bearing, or via the another radial groove, to limit rotation of the one-way bearing relative to the bearing sleeve in the circumferential direction of the brake motor. The bearing sleeve and the one-way bearing are circumferentially fastened via a structure in the radial direction of the brake motor, so that the axial size of the electro-mechanical brake apparatus can be reduced.

In an implementation, in the axial direction of the brake motor, a length of the bearing sleeve is greater than a length of the one-way bearing, the bearing sleeve extends from at least one end of the one-way bearing, and a part that is of the bearing sleeve and that extends out of the one-way bearing includes at least one axial limiting block. In the radial direction of the brake motor, the at least one axial limiting block extends toward the motor shaft, and a distance between each axial limiting block and the motor shaft is greater than or equal to a radius of an inner circumferential surface of the one-way bearing.

In the axial direction of the brake motor, a surface that is of each axial limiting block and that faces the one-way bearing is configured to abut against and drive the one-way bearing to slide.

In this implementation, the bearing sleeve abuts against the one-way bearing via the at least one axial limiting block, to drive the one-way bearing to slide in the axial direction of the brake motor, to ensure that the bearing sleeve reliably drives the one-way bearing to slide from the first section to the second section, or slide from the second section to the first section. This avoids a phenomenon that the one-way bearing may not slide in place because the bearing sleeve is not firmly embedded in the one-way bearing. This improves reliability of the parking function of the electro-mechanical brake apparatus.

In an implementation, the spacing base includes at least one axial protrusion, and a length of each axial protrusion is greater than a length of the first section in the axial direction of the brake motor.

In this implementation, a length of the axial protrusion of the spacing base is greater than the length of the first section, so that it can be ensured that the bearing sleeve always abuts against the spacing base in the radial direction of the brake motor in a process of sliding in the axial direction of the brake motor. This effectively limits the offset of the bearing sleeve in the radial direction of the brake motor. The bearing sleeve and the spacing base implement guided sliding via the structure in the radial direction of the brake motor, so that the axial size of the electro-mechanical brake apparatus can be reduced.

In an implementation, the spacing base includes the axial protrusion, the axial protrusion is annular and sleeved on the outer circumferential surface of the bearing sleeve, and the axial protrusion includes a notch. In the circumferential direction of the brake motor, a width of the notch is greater than or equal to a width of the radial protrusion on the outer circumferential surface of the bearing sleeve, and is greater than or equal to a width of the driving piece. In the axial direction of the brake motor, a length of the notch is greater than a sum of a length of the radial protrusion and the length of the first section.

In this implementation, the annular axial protrusion and the bearing sleeve have a large attachment area, and effect of limiting the offset of the bearing sleeve in the radial direction of the brake motor is better. The notch is configured to form a circumferential limit on the bearing sleeve in the one direction and the another direction, and the length of the notch can ensure that the bearing sleeve drives the one-way bearing to reliably slide to the first section or the second section.

In an implementation, a housing of the brake motor includes a motor end cover. In the axial direction of the brake motor, the motor end cover is arranged on a side of a stator of the brake motor, the motor shaft passes through a shaft hole of the motor end cover, and the one-way bearing is arranged on a side that is of the motor end cover and that is away from the stator. In the radial direction of the brake motor, a size of the spacing base is less than a size of the motor end cover.

In this implementation, the one-way bearing is located on an outer side of the housing of the brake motor in the axial direction of the brake motor, and correspondingly, the bearing sleeve, the spacing base, and the driving piece are also located on the outer side of the housing of the brake motor, and do not occupy internal space of the housing of the brake motor. An internal structure of the brake motor is compact. An outer diameter of the spacing base is controlled to be less than an outer diameter of the motor end cover, so that radial sizes of the one-way bearing and the bearing sleeve can be further controlled. This facilitates miniaturization of the electro-mechanical brake apparatus.

In an implementation, an end face that is of the motor end cover and that is away from the stator includes at least one axial protrusion, and the at least one axial protrusion is configured to form the spacing base.

In this implementation, the spacing base includes the at least one axial protrusion, and each axial protrusion extends in the axial direction of the brake motor. The motor end cover is configured to fasten each axial protrusion, to limit fluttering of the bearing sleeve in the radial direction of the brake motor and guided sliding in the axial direction of the brake motor.

In an implementation, the housing of the brake motor further includes a stator sleeve. The stator sleeve is configured to fasten and accommodate the stator of the brake motor, an outer circumferential surface of the motor end cover or an outer circumferential surface of the stator sleeve includes a radial boss, an extension direction of the radial boss is away from the motor shaft in the radial direction of the brake motor, the radial boss is configured to fasten a parking motor, and the parking motor is configured to drive the driving piece.

In this implementation, the parking motor is disposed in the radial direction of the brake motor, to drive the driving piece to slide toward or away from the one-way bearing, so that the axial size of the electro-mechanical brake apparatus can be reduced.

In an implementation, an axial direction of the parking motor is parallel to the radial direction of the brake motor.

In an implementation, the axial direction of the parking motor is parallel to the axial direction of the brake motor. In the radial direction of the brake motor, the parking motor and the stator sleeve are adjacently arranged. In the axial direction of the brake motor, a stator of the parking motor and the stator sleeve are located on a same side of the motor end cover, and an output shaft of the parking motor is configured to pass through the radial boss to drive the driving piece.

In this implementation, a radial size of the parking motor is usually smaller than the axial size, and the axial direction of the parking motor is set to be parallel to the axial direction of the brake motor, so that the radial size of the electro-mechanical brake apparatus can be reduced. The axial size of the parking motor is usually smaller than the axial size of the brake motor. Setting the parking motor and the brake motor to be located on a same side of a one-way bearing does not increase an axial size of the electro-mechanical brake apparatus.

In an implementation, the driving piece includes a rotating member and a nut. An extension direction of the rotating member is parallel to the radial direction of the brake motor, and a middle section of the rotating member is configured to rotatably connect to the housing of the brake motor. In the radial direction of the brake motor, a distance between the nut and the bearing sleeve is less than a length of the rotating member. The nut is configured to be driven by the parking motor to drive one end of the rotating member to rotate, and the other end of the rotating member is configured to drive, via the bearing sleeve, the one-way bearing to slide.

In this implementation, the driving piece is driven by the parking motor via the nut, and the bearing sleeve is driven, via the rotating member, to slide in the axial direction of the brake motor. The nut and the rotating member are arranged in the radial direction of the brake motor, so that the axial size of the electro-mechanical brake apparatus can be reduced.

In an implementation, an outer circumferential surface of the nut includes a limiting bump, and the electro-mechanical brake apparatus includes another spacing base. The limiting bump extends toward the motor shaft in a radial direction of the nut, and the limiting bump is configured to drive the one end of the rotating member. A radial length of the limiting bump is greater than a distance between the another spacing base and the nut, and the nut abuts against the another spacing base via the limiting bump in a circumferential direction of the nut.

In this implementation, the nut is driven by the parking motor and slides in the axial direction of the brake motor. Circumferential limiting and axial guiding are implemented between the another spacing base and the nut via a structure in the radial structure of the nut, to ensure that the nut reliably drives the bearing sleeve, and reduce the axial size of the electro-mechanical brake apparatus.

In an implementation, the driving piece includes a threaded spindle, and a length direction of the threaded spindle is parallel to the axial direction of the brake motor. One end of the threaded spindle is configured to be in transmission connection to the parking motor, and the other end is configured to engage with the nut.

In an implementation, an inner circumferential surface of the one-way bearing includes at least one groove, and each groove is configured to accommodate one movable member. A groove depth of each groove gradually increases in one direction. In the radial direction of the brake motor, a sum of a radial length of the movable member and a radius of the first section is less than a maximum groove depth of the groove, and is greater than or equal to a minimum groove depth of the groove.

In this implementation, the one-way bearing is coupled to the outer circumferential surface of the first section through sliding of the movable member in the groove, and a coupling direction is the another direction. In a process in which the first section rotates in the one direction or the second section rotates in the one direction or the another direction, each movable member is not coupled to the outer circumferential surface of the motor shaft, to ensure that the motor shaft operates normally.

In an implementation, the one-way bearing includes at least one elastic member, each elastic member is elastically connected between the movable member and a groove wall of the groove in the circumferential direction of the brake motor, and each elastic member is configured to drive the movable member to slide in the groove in the another direction.

In this implementation, the elastic member is configured to drive the movable member to maintain a tendency to slide in the another direction, so that a phenomenon that the one-way bearing cannot be coupled because the movable member flutters in the one direction can be avoided. This improves reliability of the one-way bearing.

According to a second aspect, this application provides a vehicle. The vehicle includes a wheel, a vehicle frame, and the electro-mechanical brake apparatus provided in any one of the foregoing implementations. An axial direction of a brake motor in the electro-mechanical brake apparatus is parallel to an axis of the wheel, and the brake motor is configured to slidably connect to the vehicle frame in the axial direction. A motor shaft in the electro-mechanical brake apparatus is configured to rotate in one direction and drive a friction plate to slide in an axial direction of the wheel to abut against a brake disc. A one-way bearing in the electro-mechanical brake apparatus is configured to lock the friction plate.

Because an axial size of the electro-mechanical brake apparatus provided in the first aspect of this application is short, the vehicle provided in the second aspect of this application also facilitates arrangement of wheel space, and therefore larger internal space or a more compact structure is obtained.

### BRIEF DESCRIPTION OF DRAWINGS

To describe technical solutions in this application more clearly, the following briefly describes accompanying drawings for describing implementations. Clearly, the accompanying drawings in the following descriptions are merely some implementations of this application, and a person of ordinary skill in the art may still derive other accompanying drawings from these accompanying drawings without creative efforts.
FIG. 1 is a diagram of a partial appearance structure of a wheel of a vehicle according to an embodiment of this application;
FIG. 2 is a diagram of a partial cross-sectional structure of a wheel of a vehicle according to an embodiment of this application;
FIG. 3 is a diagram of a cross-sectional structure of a drive mechanism in an electro-mechanical brake apparatus according to an embodiment of this application;
FIG. 4 is a diagram of a cross-sectional structure of a brake caliper in an electro-mechanical brake apparatus according to an embodiment of this application;
FIG. 5 is a diagram of a cross-sectional structure of an internal component of a housing in an electro-mechanical brake apparatus according to an embodiment of this application;
FIG. 6 is a diagram of a structure of cooperation between a brake motor and a locking mechanism in an electro-mechanical brake apparatus according to an embodiment of this application;
FIG. 7 is a diagram of an exploded structure of a brake motor and a locking mechanism in an electro-mechanical brake apparatus according to an embodiment of this application;
FIG. 8 is a diagram of a structure of a one-way bearing in an electro-mechanical brake apparatus according to an embodiment of this application;
FIG. 9 is a diagram of a structure of another state of a one-way bearing in an electro-mechanical brake apparatus according to an embodiment of this application;
FIG. 10 is a diagram of a structure of cooperation between a one-way bearing and a motor shaft in an electro-mechanical brake apparatus according to an embodiment of this application;
FIG. 11 is a diagram of a structure of cooperation between a bearing sleeve and a one-way bearing in an electro-mechanical brake apparatus according to an embodiment of this application;
FIG. 12 is a diagram of an exploded structure of cooperation between a bearing sleeve and a one-way bearing in an electro-mechanical brake apparatus according to an embodiment of this application;
FIG. 13 is a diagram of a cross-sectional structure of cooperation between a bearing sleeve and a one-way bearing in an electro-mechanical brake apparatus according to an embodiment of this application;
FIG. 14 is a diagram of a structure of cooperation between a bearing sleeve and a spacing base in an electro-mechanical brake apparatus according to an embodiment of this application;
FIG. 15 is a diagram of an exploded structure of cooperation between a bearing sleeve and a spacing base in an electro-mechanical brake apparatus according to an embodiment of this application;
FIG. 16 is a diagram of a structure of cooperation between a bearing sleeve and a driving piece in an electro-mechanical brake apparatus according to an embodiment of this application;
FIG. 17 is a diagram of an exploded structure of cooperation between a bearing sleeve and a driving piece in an electro-mechanical brake apparatus according to an embodiment of this application;
FIG. 18 is a diagram of a structure of cooperation between a brake motor and a parking motor in an electro-mechanical brake apparatus according to an embodiment of this application;
FIG. 19 is a diagram of an exploded structure of a brake motor and a parking motor in an electro-mechanical brake apparatus according to an embodiment of this application;
FIG. 20 is a diagram of another structure of cooperation between a brake motor and a parking motor in an electro-mechanical brake apparatus according to an embodiment of this application;
FIG. 21 is a diagram of a structure of a driving piece in an electro-mechanical brake apparatus according to an embodiment of this application;
FIG. 22 is a diagram of an exploded structure of a driving piece in an electro-mechanical brake apparatus according to an embodiment of this application;
FIG. 23 is a diagram of a limiting structure of a driving piece in an electro-mechanical brake apparatus according to an embodiment of this application; and
FIG. 24 is an exploded diagram of a limiting structure of a driving piece in an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, terms such as "first" and "second" are sequence numbers of components, are merely intended to distinguish between the described objects, and do not have any sequential or technical meaning. Unless otherwise specified, the "connection" in this application includes a direct connection and an indirect connection. In descriptions of this application, it should be understood that orientation or position relationships indicated by the terms "above", "below", "front", "back", "top", "bottom", "inside", "outside", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus. The electro-mechanical brake apparatus provided in this application includes a brake motor, a one-way bearing, a bearing sleeve, a spacing base, and a driving piece. A motor shaft of the brake motor is configured to rotate in one direction and drive a friction plate to brake. The motor shaft includes a first section and a second section that are arranged in an axial direction, and a diameter of the first section is greater than a diameter of the second section. The one-way bearing is configured be coupled to an outer circumferential surface of the first section to limit rotation of the motor shaft in another direction. The one direction is opposite to the another direction. The bearing sleeve and the spacing base are sequentially arranged outside the one-way bearing in a radial direction of the brake motor, and the bearing sleeve is configured to be fastened to the one-way bearing. The spacing base is configured to limit an offset of the bearing sleeve in the radial direction of the brake motor, and is configured to limit, via the bearing sleeve, rotation of the one-way bearing in the another direction. The driving piece is configured to drive, via the bearing sleeve, the one-way bearing to move from the first section to the second section or move from the second section to the first section.

The electro-mechanical brake apparatus provided in this application drives the friction plate via the brake motor to abut against a brake disc of a wheel, to implement braking. The one-way bearing, the bearing sleeve, the spacing base, and the driving piece are sequentially arranged in the radial direction of the brake motor. This compresses an axial size of the electro-mechanical brake apparatus, and facilitates adaptation of the electro-mechanical brake apparatus to wheel space.

This application provides a vehicle. The vehicle provided in this application includes a wheel, a vehicle frame, and the electro-mechanical brake apparatus provided in this application. The electro-mechanical brake apparatus is fastened to the vehicle frame and is located at the wheel, and the electro-mechanical brake apparatus brakes the wheel via an internal mechanism. An axial direction of a brake motor in the electro-mechanical brake apparatus is parallel to an axis of the wheel, and the brake motor is configured to slidably connect to the vehicle frame in the axial direction. A motor shaft in the electro-mechanical brake apparatus is configured to rotate in one direction and drive a friction plate to slide in an axial direction of the wheel to abut against a brake disc. A one-way bearing in the electro-mechanical brake apparatus is configured to lock the friction plate. The electro-mechanical brake apparatus in the vehicle provided in this application facilitates arrangement of wheel space, and therefore larger internal space or a more compact structure is obtained.

The vehicle provided in this application may include a plurality of electro-mechanical brake apparatuses, and each electro-mechanical brake apparatus corresponds to one wheel. The vehicle further includes a brake pedal, and the brake pedal is configured to control the plurality of electro-mechanical brake apparatuses to drive friction plates toward or away from brake discs of wheels.

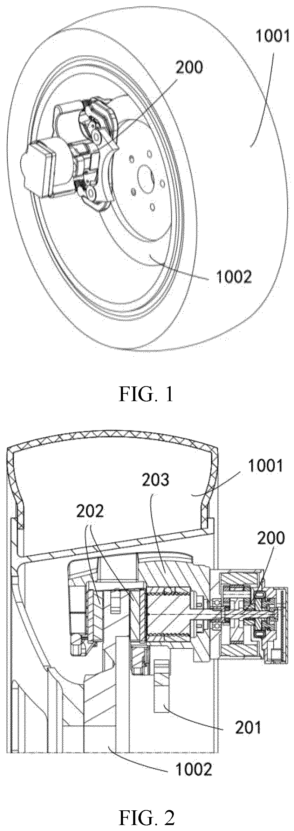

FIG. 1 is a diagram of a partial appearance structure of a wheel of a vehicle according to an embodiment of this application.

As shown in FIG. 1, a brake disc 1002 is disposed on a wheel 1001, and the brake disc 1002 is coaxially fastened to a wheel hub of the wheel 1001. The wheel 1001 rotates relative to a vehicle frame, and the brake disc 1002 synchronously rotates with the wheel 1001 relative to the vehicle frame. In the diagram of FIG. 1, an outer diameter size of the brake disc 1002 is less than an inner diameter size of an inner rim of the wheel, and the brake disc 1002 is accommodated in the inner rim of the wheel 1001.

An electro-mechanical brake apparatus 200 provided in this application is fastened to the vehicle frame. The electro-mechanical brake apparatus 200 at least partially extends into the inner rim of the wheel 1001, and cooperates with the brake disc 1002 to brake the wheel 1001.

FIG. 2 is a diagram of a partial cross-sectional structure of the wheel of the vehicle according to an embodiment of this application.

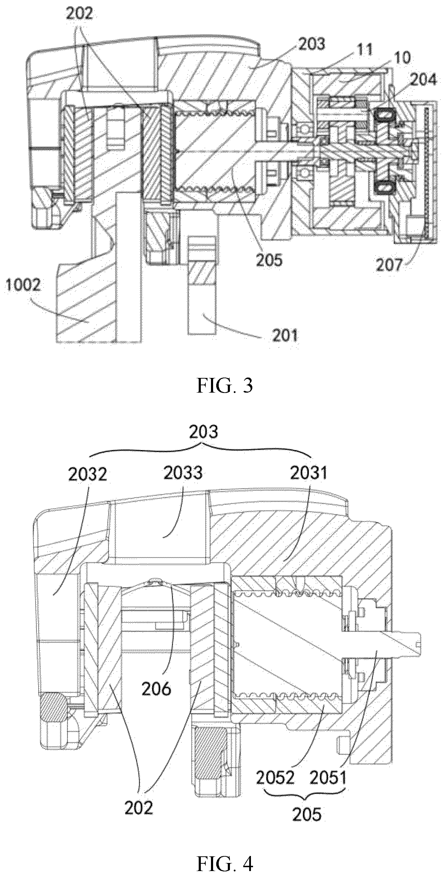

As shown in FIG. 2, the electro-mechanical brake apparatus 200 provided in this application includes a caliper holder 201, a friction plate 202, a brake caliper 203, and a drive mechanism. The drive mechanism includes a brake motor 10, a reducer 204, and a feed mechanism 205. For the feed mechanism 205, refer to FIG. 3. The caliper holder 201 is configured to be fastened to the vehicle frame, the brake caliper 203 is slidably connected to the caliper holder 201, and the drive mechanism is fastened to the brake caliper 203 and synchronously slides with the brake caliper 203 relative to the caliper holder 201. In some embodiments, the brake caliper 203 and the caliper holder 201 are slidably connected through a through hole and a sliding rod. In other words, the brake caliper 203 has one of the through hole and the sliding rod, and the caliper holder 201 has the other one of the through hole and the sliding rod. Relative sliding between the brake caliper 203 and the caliper holder 201 is implemented through axial sliding of the sliding rod in the through hole.

It should be noted that a sliding direction of the brake caliper 203 relative to the caliper holder 201 is parallel to an axial direction of the brake disc 1002. In other words, an axial direction of the brake motor 10 in the electro-mechanical brake apparatus 200 is parallel to an axis of the wheel 1001, and the brake motor 10 is configured to be slidably connected to the vehicle frame in an axial direction of the wheel 1001. In correspondence to the embodiment of cooperation between the through hole and the sliding rod, an axial direction of the through hole and an axis of the sliding rod are both parallel to the axial direction of the brake disc 1002.

The brake caliper 203 is configured to mount the friction plate 202 and the drive mechanism. There is at least one friction plate 202.

As shown in FIG. 2, in an embodiment, there are two friction plates 202. The brake motor 10 in the electro-mechanical brake apparatus 200 is configured to drive the at least one friction plate 202 to slide in the axial direction of the wheel 1001 to abut against the brake disc 1002. In this embodiment, the two friction plates 202 are respectively arranged on two sides of the brake disc 1002 in the axial direction of the brake disc 1002. The two friction plates 202 respectively face two opposite outer surfaces of the brake disc 1002. The drive mechanism is configured to drive the friction plate 202 to face or away from the brake disc 1002 of the vehicle. The drive mechanism may push, through an action of an internal mechanism and sliding relative to the caliper holder 201, the two friction plates 202 to slide toward each other and be in contact with the two opposite outer surfaces of the brake disc 1002, to generate friction to brake the brake disc 1002.

FIG. 3 is a diagram of a cross-sectional structure of the drive mechanism in the electro-mechanical brake apparatus 200 according to an embodiment of this application.

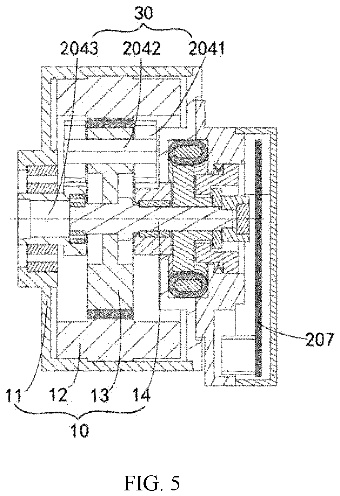

As shown in FIG. 3, the drive mechanism in this application includes the brake motor 10, the reducer 204, and the feed mechanism 205. The brake motor 10 includes a housing 11, and the housing 11 is fastened to the brake caliper 203 in the axial direction of the brake motor 10. Refer to FIG. 5. The housing 11 is configured to fasten a stator 12 of the brake motor 10. An inner cavity of the housing 11 is configured to accommodate the stator 12 and a rotor 13 of the brake motor 10. In some embodiments, the housing 11 of the brake motor 10 may be further configured to accommodate a gear group 2041 of the reducer 204. In other words, the gear group 2041 of the reducer 204 is integrated into the housing 11 of the brake motor 10, so that the internal mechanism of the electro-mechanical brake apparatus 200 is arranged more compactly, and an overall volume is reduced. The brake caliper 203 is configured to at least partially accommodate the feed mechanism 205. The brake caliper 203 is further configured to drive the housing 11 and slide relative to the caliper holder 201 in the axial direction of the brake disc 1002. The reducer 204 is configured to be in transmission connection to the feed mechanism 205 and the brake motor 10, and the brake motor 10 is configured to drive the reducer 204 to rotate to push the friction plate 202 and drive the brake caliper 203.

FIG. 4 is a diagram of a cross-sectional structure of the brake caliper 203 in the electro-mechanical brake apparatus according to an embodiment of this application.

The brake caliper 203 is roughly U-shaped, and the brake caliper 203 includes a main body part 2031, a pushing part 2032, and a connecting part 2033. The main body part 2031 and the pushing part 2032 are respectively arranged on the two sides of the brake disc 1002 in the axial direction of the brake disc 1002, and the main body part 2031 and the pushing part 2032 are further respectively arranged on two sides of the two friction plates 202 in the axial direction of the brake disc 1002. In other words, the main body part 2031, one friction plate 202, the brake disc 1002, the other friction plate 202, and the pushing part 2032 are sequentially arranged in the axial direction of the brake disc 1002. The connecting part 2033 is located on an outer side of the brake disc 1002 in a radial direction of the brake disc 1002, and the connecting part 2033 is configured to be fastened to the main body part 2031 and the pushing part 2032.

In an embodiment, the friction plate 202 located on a side that is of the brake disc 1002 and that is close to the main body part 2031 is slidably connected to the main body part 2031. In an embodiment, the friction plate 202 located on a side that is of the brake disc 1002 and that is close to the pushing part 2032 is fastened to the pushing part 2032.

The main body part 2031 is further configured to be slidably connected to the caliper holder 201. The feed mechanism 205 is at least partially accommodated in an inner cavity of the main body part 2031. The housing 11 is fastened on a side that is of the main body part 2031 and that is away from the pushing part 2032. The feed mechanism 205 is configured to be in transmission connection to the reducer 204, the main body part 2031 and the housing 11 each are provided with an avoidance hole, and the avoidance hole is used to avoid a transmission shaft between the feed mechanism 205 and the reducer 204.

In some embodiments, the transmission shaft and an input shaft of the feed mechanism 205 may be of an integrated structure. In other words, the input shaft of the feed mechanism 205 may pass through the two avoidance holes and extend into the housing 11 to be in transmission connection to the reducer 204.

In some other embodiments, the transmission shaft and an output shaft of the reducer 204 may be of an integrated structure. In other words, the output shaft of the reducer 204 may pass through the two avoidance holes and extend into the inner cavity of the main body part 2031 to be in transmission connection to the feed mechanism 205.

The feed mechanism 205 includes a lead screw 2051 and a screw jacket 2052. The screw jacket 2052 is coaxially sleeved on an outer side of the lead screw 2051, and the lead screw 2051 is configured to be in coaxial transmission with the output shaft of the reducer 204. The output shaft of the reducer 204 drives the lead screw 2051 to rotate, to drive the screw jacket 2052 to slide. In this case, an end portion that is of the lead screw 2051 and that faces the reducer 204 may be considered as the input shaft of the feed mechanism 205.

Specifically, threads that cooperate with each other are provided on an outer circumferential surface of the lead screw 2051 and an inner circumferential surface of the screw jacket 2052. When the lead screw 2051 is driven by the reducer 204 to rotate along an axis of the lead screw 2051, the lead screw 2051 may drive the screw jacket 2052 to slide along the axis of the lead screw 2051. On a side that is of the screw jacket 2052 and that is away from the reducer 204, the screw jacket 2052, one friction plate 202, and the brake disc 1002 are sequentially arranged along the axis of the lead screw 2051. The lead screw 2051 drives the screw jacket 2052 to slide along the axis of the lead screw 2051, to drive the friction plate 202 to move relative to the brake disc 1002.

In an embodiment, one direction is a forward rotation of a motor shaft 14 of the brake motor 10, and another direction is a reverse rotation of the motor shaft 14 of the brake motor 10.

When the brake motor 10 rotates forward, the reducer 204 drives the lead screw 2051 to rotate forward along the axis of the lead screw 2051, and the screw jacket 2052 slides toward the brake disc 1002 along the axis of the lead screw 2051 and drives the friction plate 202 to be in contact with the brake disc 1002 to implement braking. When the brake motor 10 reverses, the reducer 204 drives the lead screw 2051 to reverse along the axis of the lead screw 2051, the screw jacket 2052 slides along the axis of the lead screw 2051 in a direction away from the brake disc 1002, and the friction plate 202 is released from the brake disc 1002.

In some embodiments, a separation spring 206 is further disposed between the two friction plates 202. Two opposite ends of the separation spring 206 respectively abut against the two friction plates 202. The separation spring 206 is configured to provide elastic force for the two friction plates 202 to get away from each other in an axial direction of the lead screw 2051, to ensure that the two friction plates 202 are separately released from contact with the brake disc 1002 after the screw jacket 2052 slides away from the brake disc 1002.

In some embodiments, a ball may be further disposed between the lead screw 2051 and the screw jacket 2052. For ease of description of an overall structure, the ball is not shown in the figure. There are a plurality of balls, and the balls abut between an outer circumferential surface thread of the lead screw 2051 and an inner circumferential surface thread of the screw jacket 2052. The ball is configured to reduce friction between the lead screw 2051 and the screw jacket 2052, and improve transmission efficiency of the drive mechanism.

FIG. 5 is a diagram of a cross-sectional structure of an internal component of the housing 11 in the electro-mechanical brake apparatus according to an embodiment of this application.

As shown in FIG. 5, in an embodiment, the stator 12 and the rotor 13 are coaxially arranged in a radial direction of the brake motor 10. The stator 12 is configured to drive the rotor 13 to rotate, to output power. The brake motor 10 further includes the motor shaft 14, and the motor shaft 14 is coaxially fastened to the rotor 13.

In the embodiment shown in FIG. 5, the brake motor 10 is an inner rotor motor, the stator 12 is coaxially sleeved on an outer side of the rotor 13, and the rotor 13 is located in a center hole of the stator 12. In this case, the housing 11 is configured to fasten the stator 12, and the stator 12 drives the rotor 13 to rotate in the center hole of the stator 12. In some other embodiments, the brake motor 10 may be an outer rotor motor, the rotor 13 is coaxially sleeved on an outer side of the stator 12, and the stator 12 is located in a center hole of the rotor 13. In this case, a structure of a support cylinder is disposed in the housing 11, the support cylinder is configured to fasten the stator 12, and the stator 12 drives the rotor 13 to rotate on the outer side of the stator 12.

The reducer 204 includes a transmission shaft 2042, a drive shaft 2043, and the gear group 2041. The transmission shaft 2042 is in transmission connection to the drive shaft 2043 via the gear group 2041. The transmission shaft 2042 is configured to be in transmission connection to the brake motor 10. The drive shaft 2043 is configured to be in transmission connection to the feed mechanism 205. Specifically, the transmission shaft 2042 of the reducer 204 is configured to drive the motor shaft 14 of the brake motor 10 in a transmission manner. The drive shaft 2043 of the reducer 204 is configured to coaxially drive the lead screw 2051 of the feed mechanism 205 in a transmission manner.

The gear group 2041 is configured to adjust a rotational speed output by the motor shaft 14 of the brake motor 10. In some embodiments, an axis of the transmission shaft 2042 in the reducer 204 is biased against an axis of the drive shaft 2043. A structure of the gear group 2041 is compact, and can provide a large reduction ratio. This is conducive to miniaturization of the drive mechanism in this application.

It should be noted that, in the diagrams of FIG. 3 and FIG. 5, the reducer 204 is a coaxial reducer, and the gear group 2041 is a planetary gear group. Such a structure can reduce a volume of the reducer 204. Therefore, the transmission shaft 2042 of the reducer 204 may be in transmission connection to the motor shaft 14 of the brake motor 10 via the planetary gear group. In this case, the motor shaft 14 and the transmission shaft 2042 are spaced from each other in the radial direction of the brake motor 10. In some other embodiments, the gear group 2041 of the reducer 204 may be a parallel shaft gear group. In this case, the transmission shaft 2042 of the reducer 204 and the motor shaft 14 of the brake motor 10 are coaxially driven in a transmission manner. The foregoing implementation does not affect function implementation of the electro-mechanical brake apparatus 200 in this application.

When the vehicle needs to be braked, the stator 12 of the brake motor 10 drives the rotor 13 to drive the motor shaft 14 to rotate forward. The motor shaft 14 drives the transmission shaft 2042 of the reducer 204 that is in transmission connection to the motor shaft 14 to synchronously rotate forward. The transmission shaft 2042 drives the drive shaft 2043 to rotate forward via the gear group 2041. The drive shaft 2043 drives the lead screw 2051 in the feed mechanism 205 that is in transmission connection to the drive shaft 2043 to synchronously rotate forward. The feed mechanism 205 is configured to convert a rotation action of the lead screw 2051 into a sliding action of the screw jacket 2052, in other words, the lead screw 2051 drives the screw jacket 2052 to slide along the axis of the lead screw 2051. A sliding direction of the screw jacket 2052 is a direction toward the brake disc 1002. The screw jacket 2052 pushes one friction plate 202 to move toward the brake disc 1002, so that the friction plate 202 is in contact with the brake disc 1002 to generate friction.

After the friction plate 202 that is close to the screw jacket 2052 is in contact with and abuts against the brake disc 1002, the stator 12 of the brake motor 10 continues to drive the rotor 13 to rotate forward, and the screw jacket 2052 continues to slide in the axial direction of the lead screw 2051 through a same power transfer path. Because a position of the brake disc 1002 is fixed, the screw jacket 2052 and the friction plate 202 sequentially abut against the brake disc 1002. The screw jacket 2052 receives reverse abutting thrust from the brake disc 1002. An axial sliding action of the screw jacket 2052 relative to the lead screw 2051 is converted into a sliding action of the brake caliper 203 being reversely pushed by the screw jacket 2052 relative to the caliper holder 201. In other words, after the friction plate 202 that is close to the screw jacket 2052 is in contact with and abuts against the brake disc 1002, an axial size of the feed mechanism 205 further increases under an action of the brake motor 10, to reversely push the brake caliper 203 to slide relative to the caliper holder 201 in a direction toward the housing 11. The housing 11 synchronously slides with the brake caliper 203 in a direction away from the brake disc 1002.

Sliding of the brake caliper 203 in the direction toward the housing 11 may drive the pushing part 2032 to synchronously slide in the direction toward the housing 11. Because the pushing part 2032 is located on a side that is of the brake disc 1002 and that is away from the housing 11, a sliding direction of the pushing part 2032 is a direction toward the brake disc 1002. In other words, after the friction plate 202 that is close to the screw jacket 2052 is in contact with and abuts against the brake disc 1002, the feed mechanism 205 further drives the pushing part 2032 to slide toward the brake disc 1002. In this way, the pushing part 2032 drives the other friction plate 202 located on the same side to synchronously slide toward the brake disc 1002, so that the other friction plate 202 is in contact with the brake disc 1002 to generate friction.

Therefore, through an action of the internal mechanism of the drive mechanism, the friction plates 202 located on the two sides of the brake disc 1002 may be driven to slide toward each other and be respectively in contact with the two opposite outer surfaces of the brake disc 1002, to generate the friction to brake the brake disc 1002 and implement braking of the vehicle.

After the braking is completed, the stator of the brake motor 10 drives the rotor 13 to reverse. The rotor 13 sequentially drives the transmission shaft 2042 and the drive shaft 2043 of the reducer 204, and the lead screw 2051 of the feed mechanism 205 to reverse synchronously. Reverse rotation of the lead screw 2051 may drive the screw jacket 2052 to slide in the direction away from the brake disc 1002, so that a spacing between the two friction plates 202 increases. The two friction plates 202 are separately released from contact with the brake disc 1002 under an action of the separation spring 206, and the wheel 1001 continues to rotate and drives the vehicle to travel.

In some embodiments, the electro-mechanical brake apparatus 200 includes a reset spring, and the reset spring is arranged between the brake caliper 203 and the caliper holder 201. For ease of description of an overall structure, the reset spring is not shown in the figure. The reset spring is configured to drive the brake caliper 203 to slide relative to the caliper holder 201 in a direction away from the housing 11, to drive the pushing part 2032 to slide in a direction away from the brake disc 1002, to ensure that the two friction plates 202 are separately and reliably separated from the brake disc 1002.

Therefore, after the braking is completed, through the action of the internal mechanism of the drive mechanism, the friction plates 202 located on the two sides of the brake disc 1002 may be driven to slide away from each other and be respectively released from contact with the two opposite outer surfaces of the brake disc 1002, so that the wheel 1001 continues to rotate and drives the vehicle to travel.

In an embodiment, the drive mechanism includes a circuit board 207. The circuit board 207 is configured to fasten a drive circuit, and the drive circuit is configured to drive the brake motor 10. The circuit board 207 may be accommodated in the inner cavity of the housing 11 together with the brake motor 10, so that a signal transmission distance from the drive circuit to the brake motor 10 can be shortened, and internal line arrangement of the drive mechanism can be simplified. In addition, the housing 11 may provide reliable sealing protection effect for the circuit board 207.

In an embodiment, the drive mechanism includes a position sensor. The position sensor is configured to detect a rotation angle of the brake motor 10, to adjust a braking force value of the drive mechanism. The position sensor includes a stator and a rotor. The stator of the position sensor may be fastened to the housing 11, and the rotor of the position sensor may be in coaxial transmission with the motor shaft 14 of the brake motor 10 or the transmission shaft 2042 of the reducer 204. The stator of the position sensor is directly fastened to the housing 11, or may be fastened to the circuit board 207 and indirectly fastened to the housing 11 via the circuit board 207. The rotor of the position sensor is in coaxial transmission with the motor shaft 14 of the brake motor 10 or the drive shaft 2043 of the reducer 204.

Through cooperation between the stator and the rotor of the position sensor, a rotation angle of the motor shaft 14 of the brake motor 10 or the drive shaft 2043 of the reducer 204 in the inner cavity of the housing 11 may be detected. The position sensor is further in communication connection to the drive circuit on the circuit board 207. The drive circuit receives an angle signal detected by the position sensor, calculates a rotation angle of the rotor 13 in the brake motor 10, and adjusts the braking force value of the drive mechanism, in other words, adjusts braking intensity of the vehicle.

In an embodiment, the drive mechanism includes a locking mechanism. The locking mechanism is configured to lock or release the motor shaft 14 of the brake motor 10, or the locking mechanism is configured to lock or release the drive shaft 2043 of the reducer 204, so that the drive mechanism in this application further has a parking function. Specifically, in an embodiment, a part of the locking mechanism is fastened to the housing 11, and the other part acts on the motor shaft 14 of the brake motor 10 or the drive shaft 2043 of the reducer 204. When the friction plate 202 of the electro-mechanical brake apparatus 200 abuts against the brake disc 1002, the motor shaft 14 of the brake motor 10 or the drive shaft 2043 of the reducer 204 may be locked via the locking mechanism, to maintain a state in which the friction plate 202 abuts against the brake disc 1002. The brake disc 1002 no longer rotates, and the vehicle enters a parking state.

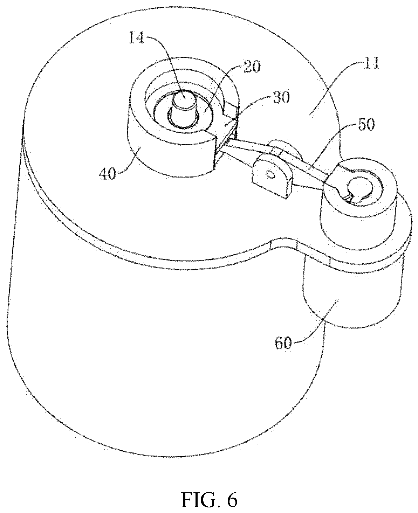

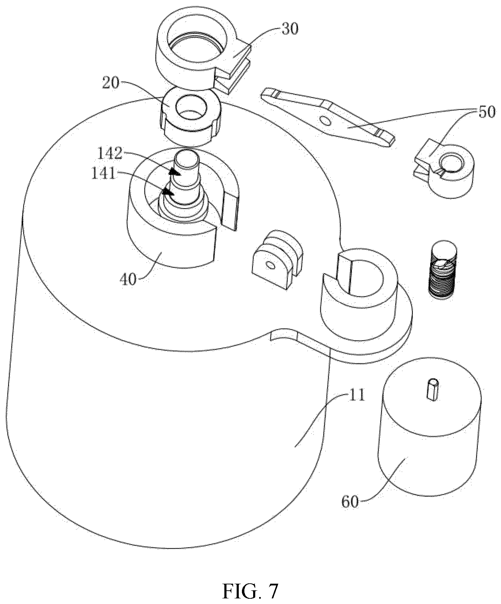

Refer to FIG. 6 and FIG. 7. FIG. 6 is a diagram of a structure in which the brake motor 10 in the drive mechanism of the electro-mechanical brake apparatus 200 cooperates with the locking mechanism according to this application.

FIG. 7 is a diagram of an exploded structure of the brake motor 10 and the locking mechanism.

The locking mechanism of the electro-mechanical brake apparatus 200 in this application uses a one-way bearing structure, and drives coupling of the one-way bearing structure in a radial direction. Specifically, the brake motor 10 includes one motor shaft. The motor shaft is a motor shaft of the brake motor 10. In some embodiments, when the housing 11 of the brake motor 10 further accommodates the gear group 2041 of the reducer 204, the motor shaft may also be understood as the drive shaft 2043 extending out of the housing 11 of the brake motor 10.

For ease of description, in this embodiment of this application, an example in which the motor shaft is the motor shaft 14 connected to the rotor 13 is subsequently used for description.

In the electro-mechanical brake apparatus 200 in this application, the motor shaft 14 of the brake motor 10 is configured to rotate in the one direction and drive the friction plate 202 to abut against the brake disc 1002. The direction may be understood as "forward rotation" of the motor shaft 14. The motor shaft 14 includes a first section 141 and a second section 142 that are arranged in an axial direction, and a diameter of the first section 141 is greater than a diameter of the second section 142.

Specifically, in the axial direction of the brake motor 10, at least a part of the first section 141 and at least a part of the second section 142 need to be located in the housing 11 or outside the housing 11. In the diagram shown in the figure, both the first section 141 and the second section 142 of the motor shaft 14 are located outside the housing 11. The first section 141 and the second section 142 may be connected in an axial direction of the motor shaft 14, to shorten an axial distance between the first section 141 and the second section 142.

In the diagram shown in the figure, the diameter of the first section 141 is greater than the diameter of the second section 142, and the first section 141 is closer to the housing 11 than the second section 142 in the axial direction of the brake motor 10. In some other embodiments, the first section 141 may be located on a side that is of the second section 142 and that is away from the housing 11 in the axial direction of the brake motor 10.

The locking mechanism includes a one-way bearing 20, a bearing sleeve 30, a spacing base 40, and a driving piece 50. The one-way bearing 20 is configured be coupled to an outer circumferential surface of the first section to limit rotation of the motor shaft 14 in the another direction. In a circumferential direction of the brake motor 10, the one direction is opposite to the another direction.

In the radial direction of the brake motor 10, the bearing sleeve 30 and the spacing base 40 are sequentially arranged outside the one-way bearing 20. The bearing sleeve 30 is configured to be fastened to the one-way bearing 20, and the spacing base 40 is configured to limit an offset of the bearing sleeve 30 in the radial direction of the brake motor 10, and is configured to limit, via the bearing sleeve 30, rotation of the one-way bearing 20 in the another direction. The driving piece 50 is in transmission connection to the bearing sleeve 30 in the radial direction of the brake motor 10, and the driving piece 50 is configured to drive, via the bearing sleeve 30, the one-way bearing 20 to move from the first section 141 to the second section 142, or move from the second section 142 to the first section 141.

Specifically, an inner circumferential surface of the one-way bearing 20 includes at least one groove 21, and each groove 21 is configured to accommodate one movable member 22. A groove depth of each groove 21 gradually increases in the one direction.

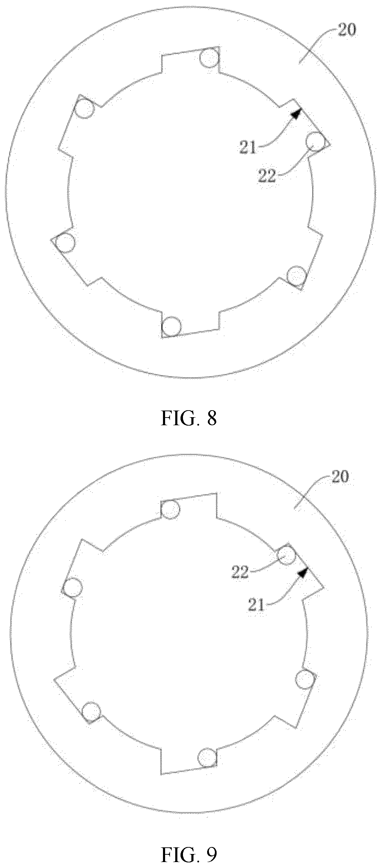

FIG. 8 is a diagram of a structure of the one-way bearing 20. The at least one groove 21 on the inner circumferential surface of the one-way bearing 20 is spaced from each other in the circumferential direction. A quantity of movable members 22 is equal to a quantity of grooves 21, and each groove 21 is configured to accommodate one movable member 22. A length of the groove 21 in the circumferential direction is greater than a length of the movable member 22, and the movable member 22 may slide in the groove 21 in the circumferential direction.

A groove depth of each groove 21 gradually increases in the one direction. To be specific, each groove 21 includes two opposite ends in the circumferential direction, and a depth of one end is greater than a depth of the other end in the circumferential direction of the one-way bearing 20. In addition, the end with a large groove depth is located behind the end with a small groove depth in the one direction. For two adjacent grooves 21 in the circumferential direction, an end of a groove 21 with a large groove depth is close to an end of the other groove 21 with a small groove depth.

In a radial direction of the one-way bearing 20, the length of the movable member 22 is less than or equal to a maximum groove depth of the groove 21 and is greater than a minimum groove depth of the groove 21. Therefore, as shown in FIG. 8, when the movable member 22 is located at the end of the groove 21 with a large groove depth, the movable member 22 is completely accommodated in the groove 21. In this state, an inner diameter of the one-way bearing 20 is equal to a diameter of the inner circumferential surface of the one-way bearing 20.

When the movable member 22 slides in the circumferential direction to the end of the groove 21 with a small groove depth, as shown in FIG. 9, the movable member 22 partially protrudes relative to the inner circumferential surface of the one-way bearing 20. In this state, the inner diameter of the one-way bearing 20 is less than the diameter of the inner circumferential surface of the one-way bearing 20. Therefore, the inner diameter of the one-way bearing 20 may change based on sliding of the movable member 22 in the groove 21.

In an embodiment, in the radial direction of the brake motor 10, a sum of a radial length of the movable member 22 and a radius of the first section 141 is less than the maximum groove depth of the groove, and is greater than or equal to the minimum groove depth of the groove.

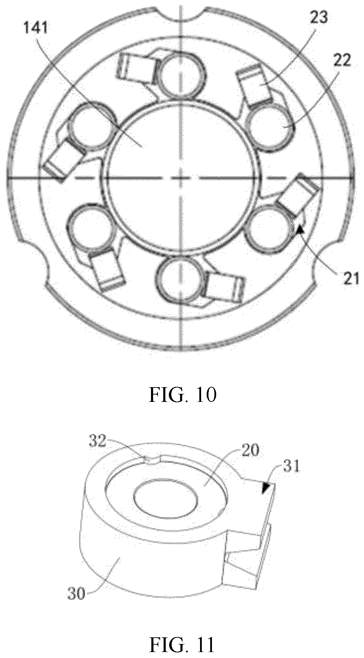

Specifically, FIG. 10 is a diagram of cooperation between the one-way bearing 20 and the first section 141 when the one-way bearing 20 is located in the first section 141 of the motor shaft 14.

In the diagram of FIG. 10, each movable member 22 is located at an end with a small groove depth of the groove 21 corresponding to the movable member 22. Each movable member 22 partially protrudes relative to the inner circumferential surface of the one-way bearing 20. In the radial direction of the brake motor 10, a sum of the movable member 22 and the minimum groove depth of the groove 21 is less than the radius of the first section 141. Therefore, two ends of each movable member 22 in the radial direction of the brake motor 10 respectively abut against a groove bottom of the groove 21 and the outer circumferential surface of the first section 141.

In this state, when the motor shaft 14 rotates in the another direction, an outer circumferential surface of the motor shaft 14 abuts against each movable member 22, and drives each movable member 22 to rotate in the another direction. Because the groove depth of the groove 21 gradually decreases in the another direction, sliding of each movable member 22 in the another direction increases friction with the outer circumferential surface of the motor shaft 14, and rotation of the motor shaft 14 in the another direction is blocked under the friction of each movable member 22. In other words, the one-way bearing 20 is coupled to the outer circumferential surface of the first section 141 to limit reverse rotation of the motor shaft 14.

In this state, when the motor shaft 14 rotates in the one direction, the outer circumferential surface of the motor shaft 14 abuts against each movable member 22, and drives each movable member 22 to rotate in the one direction. Because the groove depth of the groove 21 gradually increases in the one direction, sliding of each movable member 22 in the one direction reduces friction with the outer circumferential surface of the motor shaft 14. In some scenarios, when the movable member 22 slides to the end with a large groove depth, the movable member 22 is no longer in contact with the outer circumferential surface of the first section 141, and friction tends to 0. The motor shaft 14 can smoothly rotate in the one direction under effect of decreasing friction of each movable member 22, that is, the one-way bearing 20 does not affect forward rotation of the motor shaft 14.

It may be understood that, because the diameter of the second section 142 of the motor shaft 14 is small, when the one-way bearing 20 slides to the second section 142, the movable member 22 of the one-way bearing 20 is not in contact with an outer circumferential surface of the second section 142, or friction of contact tends to 0. The one-way bearing 20 also does not affect forward rotation and reverse rotation of the motor shaft 14.

Therefore, in the electro-mechanical brake apparatus 200 in this application, the one-way bearing 20 is coupled to the outer circumferential surface of the first section 141 through sliding of the movable member 22 in the groove 21, and a coupling direction is the another direction. In a process in which the first section 141 rotates in the one direction or the second section 142 rotates in the one direction or the another direction, each movable member 22 is not coupled to the outer circumferential surface of the motor shaft 14, to ensure that the motor shaft 14 operates normally.

After the motor shaft 14 rotates forward to drive the friction plate 202 to abut against the brake disc 1002, the one-way bearing 20 in the electro-mechanical brake apparatus 200 slides to the first section 141, and is coupled to the outer circumferential surface of the first section 141 to prevent the motor shaft 14 from reversing, and the at least one friction plate 202 may be locked. In other words, the locking mechanism is coupled to the outer circumferential surface of the first section 141 via the one-way bearing 20, to limit reverse rotation of the motor shaft 14. In this way, the locking mechanism can maintain a state in which the friction plate 202 abuts against the brake disc 1002, and limit rotation of the wheel 1001 to implement a parking function.

In some scenarios, due to a phenomenon such as thermal expansion and contraction, or stress release inside the electro-mechanical brake apparatus 200, a gap may occur during cooperation between the electro-mechanical brake apparatus 200 and the brake disc 1002. In this case, the motor shaft 14 may rotate forward. In other words, forward rotation of the motor shaft 14 is not limited by the one-way bearing 20. The forward rotating motor shaft 14 further pushes the friction plate 202 to compensate for the gap between the friction plate 202 and the brake disc 1002, to maintain clamping force of the electro-mechanical brake apparatus 200 on the brake disc 1002, to improve reliability of a parking function of the electro-mechanical brake apparatus 200 in this application.

In an embodiment, the one-way bearing 20 includes at least one elastic member 23, each elastic member 23 is elastically connected between the movable member 22 and a groove wall of the groove 21 in the circumferential direction of the brake motor 10, and each elastic member 23 is configured to drive the movable member 22 to slide in the groove 21 in the another direction.

As shown in FIG. 10, each groove 21 accommodates one elastic component 23. The elastic member 23 is arranged between the movable member 22 and the groove wall of the groove 21 in the circumferential direction of the brake motor 10. The elastic member 23 may be arranged between the movable member 22 and the groove wall of the groove 21 in the one direction. In this case, opposite ends of the elastic member 23 in the circumferential direction of the brake motor 10 are respectively fastened to the movable member 22 and the groove wall of the groove 21. The elastic member 23 may be a tension spring, and the elastic member 23 is configured to pull the movable member 22 to slide in the another direction.

However, in the diagram of FIG. 10, the elastic member 23 is arranged between the movable member 22 and the groove wall of the groove 21 in the another direction. In this case, the two opposite ends of the elastic member 23 in the circumferential direction of the brake motor 10 respectively abut against the movable member 22 and the groove wall of the groove 21. The elastic member 23 may be a compression spring, and the elastic member 23 is configured to push the movable member 22 to slide in the another direction.

Therefore, the elastic member 23 is configured to drive the movable member 22 to maintain a tendency to slide in the another direction, so that when the one-way bearing 20 is located in the first section 141, a phenomenon that the one-way bearing 20 cannot be coupled because the movable member 22 flutters in the one direction can be avoided, and reliability of the one-way bearing 20 is improved.

It should be noted that a groove depth gradient direction of the groove 21 in FIG. 10 is opposite to a groove depth gradient direction of the groove 21 in FIG. 8 and FIG. 9. In other words, in the diagrams of FIG. 8 and FIG. 9, forward and reverse rotation directions of the motor shaft 14 are opposite to forward and reverse rotation directions of the motor shaft 14 in the diagram of FIG. 10. FIG. 8, FIG. 9, and FIG. 10 are merely diagrams of operation of the one-way bearing 20. In an actual operating scenario, forward rotation and reverse rotation of the motor shaft 14 may be randomly set.

The electro-mechanical brake apparatus 200 in this application drives, via the bearing sleeve 30, the spacing base 40, and the driving piece 50, the one-way bearing 20 to slide and implement limitation on the circumferential direction of the motor shaft 14. The bearing sleeve 30 and the spacing base 40 are sequentially arranged with the one-way bearing 20 in the radial direction of the brake motor 10, and the driving piece 50 is located on a side of the bearing sleeve 30 in the radial direction of the brake motor 10. An axial size of the electro-mechanical brake apparatus 200 in this application is compressed. This helps the electro-mechanical brake apparatus 200 adapt to wheel space.

The vehicle in this application also facilitates arrangement of wheel space, and therefore larger internal space or a more compact structure is obtained.

The bearing sleeve 30 is configured to be fastened to the one-way bearing 20. In an embodiment, the bearing sleeve 30 is sleeved on the one-way bearing 20. In the radial direction of the brake motor 10, an outer circumferential surface of the bearing sleeve 30 includes a radial protrusion. An inner circumferential surface of the bearing sleeve 30 faces an outer circumferential surface of the one-way bearing 20, and the inner circumferential surface of the bearing sleeve 30 includes at least one of another radial protrusion or another radial groove.

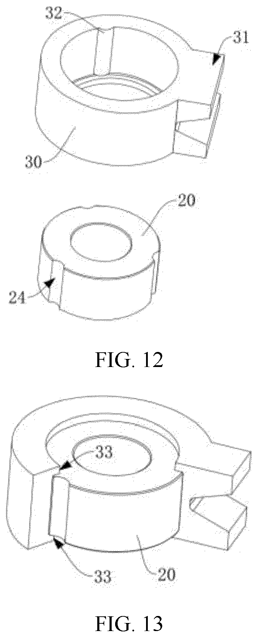

Specifically, FIG. 11 and FIG. 12 are diagrams of structures of cooperation between the bearing sleeve 30 and the one-way bearing 20. The outer circumferential surface of the bearing sleeve 30 includes the radial protrusion. For ease of description, the radial protrusion is defined as a first radial protrusion 31. The inner circumferential surface of the bearing sleeve 30 includes the another radial protrusion. For ease of description, the another radial protrusion is defined as a second radial protrusion 32.

The second radial protrusion 32 is configured to extend toward the one-way bearing 20 in the radial direction of the brake motor 10. Correspondingly, the outer circumferential surface of the one-way bearing 20 includes a radial limiting groove 24, and a position and a shape of the radial limiting groove 24 match a position and a shape of the second radial protrusion 32. The second radial protrusion 32 of the bearing sleeve 30 is configured to be embedded in the radial limiting groove 24 on the outer circumferential surface of the one-way bearing 20, to limit rotation of the one-way bearing 20 relative to the bearing sleeve 30 in the circumferential direction of the brake motor 10.

In some other embodiments, the inner circumferential surface of the bearing sleeve 30 may include the another radial groove. The outer circumferential surface of the one-way bearing 20 includes a radial limiting protrusion. For ease of description of an overall structure, the another radial groove and the radial limiting protrusion are not shown in the figure. The another radial groove on the inner circumferential surface of the bearing sleeve 30 is configured to nest the radial limiting protrusion of the one-way bearing 20, and may also limit rotation of the one-way bearing 20 relative to the bearing sleeve 30 in the circumferential direction of the brake motor 10.

In the foregoing two embodiments, the bearing sleeve 30 receives the radial limiting protrusion of the one-way bearing 20 via a second axial protrusion 41 extending toward the one-way bearing 20, or via the another radial groove, to limit rotation of the one-way bearing 20 relative to the bearing sleeve 30 in the circumferential direction of the brake motor 10. The bearing sleeve 30 and the one-way bearing 20 are circumferentially fastened via a structure in the radial direction of the brake motor 10, so that the axial size of the electro-mechanical brake apparatus 200 can be reduced.

In an embodiment, in the axial direction of the brake motor 10, a length of the bearing sleeve 30 is greater than a length of the one-way bearing 20, and the bearing sleeve 30 extends from at least one end of the one-way bearing 20.

Specifically, still refer to FIG. 11 and FIG. 12, and refer to FIG. 13 together. A part that is of the bearing sleeve 30 and that extends out of the one-way bearing 20 in the axial direction of the brake motor 10 includes at least one axial limiting block 33. In the radial direction of the brake motor 10, the at least one axial limiting block 33 extends toward the motor shaft 14. A surface that is of each axial limiting block 33 and that faces the one-way bearing 20 is configured to abut against the one-way bearing 20.

In the diagram of FIG. 13, the bearing sleeve 30 separately extends from two ends of the one-way bearing 20 in the axial direction of the brake motor 10, and two ends of the bearing sleeve 30 separately include an axial limiting block 33 in the axial direction of the brake motor 10. Therefore, in a process in which the bearing sleeve 30 is driven and slides in the axial direction of the brake motor 10, the bearing sleeve 30 abuts against the one-way bearing 20 via the at least one axial limiting block 33, to drive the one-way bearing 20 to synchronously slide in the axial direction of the brake motor 10.

Therefore, the bearing sleeve 30 reliably drives the one-way bearing 20 to slide from the first section 141 to the second section 142, or to slide from the second section 142 to the first section 141. In comparison with an embodiment in which the inner circumferential surface of the bearing sleeve 30 tightly fits the outer circumferential surface of the one-way bearing 20, and the one-way bearing 20 is driven to synchronously slide through friction, in this embodiment, a structure of the axial limiting block 33 can avoid a phenomenon that the one-way bearing 20 may not slide in place because the bearing sleeve 30 is not firmly embedded in the one-way bearing 20. This improves reliability of the parking function of the electro-mechanical brake apparatus 200.

In an embodiment, a distance between each axial limiting block 33 and the motor shaft 14 is greater than or equal to a radius of the inner circumferential surface of the one-way bearing 20, to prevent the axial limiting block 33 from abutting against the motor shaft 14 and hindering sliding actions of the bearing sleeve 30 and the one-way bearing 20 relative to the motor shaft 14.

The first radial protrusion 31 of the bearing sleeve 30 is configured to cooperate with the spacing base 40, to limit rotation of the bearing sleeve 30 and the one-way bearing 20 relative to the motor shaft 14 in the another direction.

In an embodiment, the outer circumferential surface of the bearing sleeve 30 includes the first radial protrusion 31. In the radial direction of the brake motor 10, a distance between the motor shaft 14 and an end portion that is of the first radial protrusion 31 and that is away from the motor shaft 14 is greater than a distance between the spacing base 40 and the motor shaft 14. The bearing sleeve 30 is configured to abut against the spacing base 40 via the first radial protrusion 31 in the another direction.

In an embodiment, the spacing base 40 includes the at least one axial protrusion 41. Each axial protrusion 41 extends in the axial direction of the brake motor 10, and the axial protrusion 41 is configured to abut against the first radial protrusion 31 in the circumferential direction of the brake motor 10, to limit rotation of the bearing sleeve 30 in the circumferential direction of the brake motor 10.

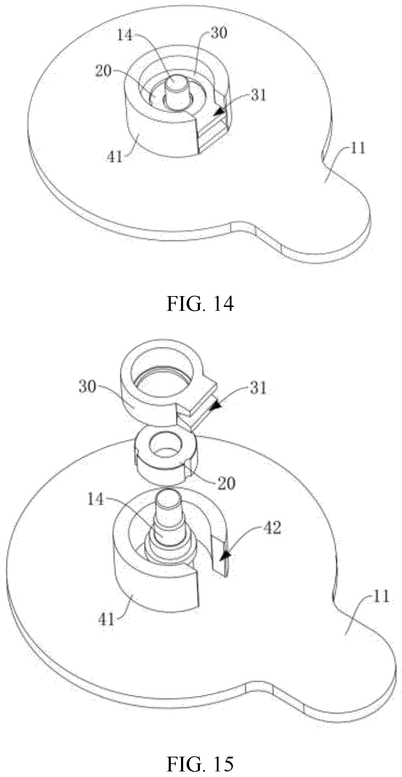

Specifically, refer to FIG. 14 and FIG. 15. The first radial protrusion 31 extends in the radial direction of the brake motor 10 in a direction away from the motor shaft 14. A distance between each axial protrusion 41 of the spacing base 40 and the motor shaft 14 is greater than a radius of the outer circumferential surface of the bearing sleeve 30, and is less than a radial length of the first radial protrusion 31. In the circumferential direction of the brake motor 10, the axial protrusion 41 is arranged at least on a side that is of the first radial protrusion 31 and that faces the another direction. Therefore, when the bearing sleeve 30 rotates in the another direction, the axial protrusion 41 abuts against opposite side walls of the first radial protrusion 31, to limit rotation of the one-way bearing 20 driven by the bearing sleeve 30 in the another direction.

In other words, the bearing sleeve 30 abuts against the spacing base 40 via the first radial protrusion 31 extending toward the spacing base 40, to limit a rotation angle of the one-way bearing 20 driven by the bearing sleeve 30 toward the another direction in the circumferential direction of the brake motor 10. The bearing sleeve 30 and the spacing base 40 limit a relative rotation angle via a structure in the radial direction of the brake motor 10, so that the axial size of the electro-mechanical brake apparatus 200 can be reduced.

In some embodiments, in the circumferential direction of the brake motor 10, the axial protrusion 41 is arranged on two sides of the first radial protrusion 31, so that rotation actions in two directions, namely, the forward rotation and the reverse rotation, of the bearing sleeve 30 and the one-way bearing 20 may be limited. In this case, the axial protrusion 41 may further guide the bearing sleeve 30 in a process in which the bearing sleeve 30 drives the one-way bearing 20 to slide in the axial direction of the brake motor 10. In other words, the spacing base 40 is configured to limit an offset of the bearing sleeve 30 in the radial direction of the brake motor 10.

In an embodiment, in the axial direction of the brake motor 10, a length of each axial protrusion 41 is greater than a length of the first section 141 of the motor shaft 14. After a sliding distance of the one-way bearing 20 in the axial direction of the brake motor 10 is greater than an axial length of the first section 141, it can be ensured that the one-way bearing 20 completely slides from the first section 141 to the second section 142, that is, it is ensured that the one-way bearing 20 completely slides away from the first section 141.

A length of the axial protrusion 41 of the spacing base 40 is greater than the length of the first section 141, so that it can be ensured that the bearing sleeve 30 always abuts against the spacing base 40 in the radial direction of the brake motor 10 in a process of sliding in the axial direction of the brake motor 10. The axial protrusion 41 can effectively limit the offset of the bearing sleeve 30 in the radial direction of the brake motor 10. The bearing sleeve 30 and the spacing base 40 implement guided sliding via the structure in the radial direction of the brake motor 10, so that the axial size of the electro-mechanical brake apparatus 200 can be reduced.

In the embodiments shown in FIG. 14 and FIG. 15, the spacing base 40 includes the axial protrusion 41, and the axial protrusion 41 is annular and sleeved on the outer circumferential surface of the bearing sleeve 30. In this case, the annular axial protrusion 41 and the bearing sleeve 30 have a large attachment area, and radial positioning and guiding may be formed for the bearing sleeve 30 from a plurality of directions, which has better effect of limiting the offset of the bearing sleeve 30 in the radial direction of the brake motor 10.

The axial protrusion 41 includes a notch 42. In the circumferential direction of the brake motor 10, a width of the notch 42 is greater than or equal to a width of the first radial protrusion 31 on the outer circumferential surface of the bearing sleeve 30, and is greater than or equal to a width of the driving piece 50. In this case, a function of the notch 42 is similar to a function of "the axial protrusion 41 is arranged on the two sides of the first radial protrusion 31". The notch 42 is configured to separately form a circumferential limit on the bearing sleeve 30 in the one direction and the another direction, and rotation actions in two directions, namely, the forward rotation and the reverse rotation, of the bearing sleeve 30 and the one-way bearing 20 may be limited. The width of the notch 42 in the circumferential direction of the brake motor 10 is greater than or equal to the width of the driving piece 50, and the driving piece 50 may partially extend into the notch 42 and drive the bearing sleeve 30 to slide.

In an embodiment, in the axial direction of the brake motor 10, a length of the notch 42 is greater than a sum of a length of the first radial protrusion 31 and the length of the first section 141. The length of the notch 42 in the axial direction of the brake motor 10 is used to provide sliding space of the bearing sleeve 30 in the axial direction of the brake motor 10. The size setting can ensure that the bearing sleeve 30 drives the one-way bearing 20 to reliably slide to the first section 141 or the second section 142.

The driving piece 50 is configured to drive, via the bearing sleeve 30, the one-way bearing 20 to move from the first section 141 to the second section 142, or move from the second section 142 to the first section 141.

In an embodiment, in the radial direction of the brake motor 10, the distance between the motor shaft 14 and the end portion that is of the first radial protrusion 31 and that is away from the motor shaft 14 is greater than a distance between the driving piece 50 and the motor shaft 14. In the axial direction of the brake motor 10, two opposite surfaces of the first radial protrusion 31 are configured to abut against the driving piece 50, to be driven.

In an embodiment, in the radial direction of the brake motor 10, an end face that is of the first radial protrusion 31 and that is away from the motor shaft 14 includes a radial groove, a distance between a groove opening of the radial groove and the motor shaft 14 is greater than the distance between the driving piece 50 and the motor shaft 14, and in the axial direction of the brake motor 10, two opposite groove walls of the radial groove are configured to abut against the driving piece 50, to be driven.

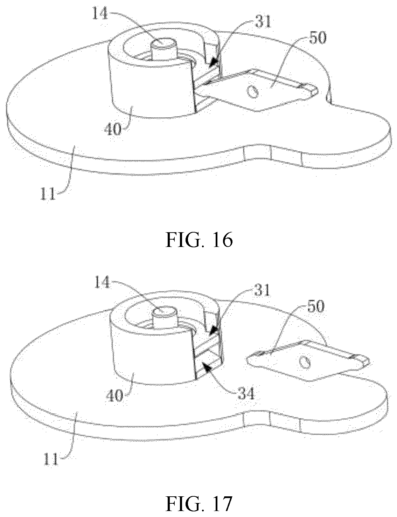

Specifically, refer to diagrams of FIG. 16 and FIG. 17. In an embodiment, the first radial protrusion 31 abuts against an end portion of the driving piece 50, to accept driving force of the driving piece 50 to slide in the axial direction of the brake motor 10.

As shown in FIG. 16 and FIG. 17, a length direction of the driving piece 50 is parallel to the radial direction of the brake motor 10. The end face that is of the first radial protrusion 31 and that is away from the motor shaft 14 includes the radial groove. In this embodiment, the radial groove is defined as a first radial groove 34. The first radial groove 34 is recessed toward the motor shaft 14 in the radial direction of the brake motor 10. Alternatively, it may be understood that two first radial protrusions 31 are spaced from each other in the axial direction of the brake motor 10, and a notch between the two first radial protrusions 31 forms the first radial groove 34.

The first radial groove 34 is configured to accommodate the end portion of the driving piece 50. The driving piece 50 is configured to reciprocate in the axial direction of the brake motor 10, and separately abut against two opposite groove walls of the first radial groove 34 in the axial direction of the brake motor 10, to drive the drive bearing sleeve 30 to drive the one-way bearing 20 to slide from the first section 141 to the second section 142 or from the second section 142 to the first section 141 in the axial direction of the brake motor 10.

However, in some other embodiments, a structure similar to the first radial groove 34 may alternatively be formed at an end portion that is of the driving piece 50 and that faces the bearing sleeve 30. For ease of description of an overall structure, the structure is not shown in the figure. The end portion that is of the driving piece 50 and that faces the bearing sleeve 30 is configured to accommodate the first radial protrusion 31. The driving piece 50 is configured to reciprocate in the axial direction of the brake motor 10, and separately abut against the two opposite surfaces of the first radial protrusion 31 in the axial direction of the brake motor 10, to drive the drive bearing sleeve 30 to drive the one-way bearing 20 to slide from the first section 141 to the second section 142 or from the second section 142 to the first section 141 in the axial direction of the brake motor 10.

In the foregoing two embodiments, the bearing sleeve 30 abuts against the driving piece 50 via the axial protrusion 41 extending toward the spacing base 40, to accept driving of the driving piece 50 and drive the one-way bearing 20 to slide in the axial direction of the brake motor 10. The bearing sleeve 30 and the driving piece 50 receive driving force via the structure in the radial direction of the brake motor 10, so that the axial size of the electro-mechanical brake apparatus 200 can be reduced.

In some embodiments, a structure similar to the first radial groove 34 may alternatively be disposed on the outer circumferential surface of the bearing sleeve 30. The end portion of the driving piece 50 is configured to extend into the outer circumferential surface of the bearing sleeve 30, and abut against two opposite groove walls of a similar groove structure in the axial direction of the brake motor 10, so that effect of driving the bearing sleeve 30 to drive the one-way bearing 20 to slide can also be achieved. In addition, in this embodiment, the end portion of the driving piece 50 further separately abuts against two opposite side walls of a similar groove structure in the circumferential direction of the brake motor 10, to limit rotation of the bearing sleeve 30 in the circumferential direction of the brake motor 10. The parking function of the electro-mechanical brake apparatus 200 can also be implemented.

In an embodiment, the housing 11 of the brake motor 10 includes a motor end cover 111 and a stator sleeve 112. In the axial direction of the brake motor 10, the motor end cover 111 is arranged on one side of the stator 12 of the brake motor 10, and the motor shaft 14 passes through a shaft hole of the motor end cover 111. The one-way bearing 20 is arranged on a side that is of the motor end cover 111 and that is away from the stator 12. In the radial direction of the brake motor 10, a size of the spacing base 40 is less than a size of the motor end cover.

The stator sleeve 112 is configured to fasten and accommodate the stator 12 of the brake motor 10. The stator sleeve 112 is fastened to the motor end cover 111. The stator sleeve 112 is located on a side that is of the motor end cover 111 and that is away from the one-way bearing 20.

In this embodiment, the one-way bearing 20 is located on an outer side of the housing 11 of the brake motor 10 in the axial direction of the brake motor 10. Correspondingly, the bearing sleeve 30, the spacing base 40, and the driving piece 50 are also located on the outer side of the housing 11 of the brake motor 10. The locking mechanism does not occupy internal space of the housing 11 of the brake motor 10. Therefore, an internal structure of the brake motor 10 is compact. An outer diameter of the spacing base 40 is less than an outer diameter of the motor end cover 111, so that radial sizes of the one-way bearing 20 and the bearing sleeve 30 can be further controlled. This facilitates miniaturization of the electro-mechanical brake apparatus 200.

It may be understood that, in some other embodiments, the one-way bearing 20, a corresponding bearing sleeve 30, the spacing base 40, and the driving piece 50 may alternatively be located in the housing 11 of the brake motor 10. For example, the one-way bearing 20 is located between the stator 12 and the motor end cover 111, or the one-way bearing 20 is located on a side that is of the stator 12 and that is away from the motor end cover 111. The one-way bearing 20 in the housing 11 may also implement the parking function by limiting reverse rotation of the motor shaft 14, and internal components of the housing 11 are arranged more compactly. This improves integration of the electro-mechanical brake apparatus 200.

In an embodiment, an end face that is of the motor end cover 111 and that is away from the stator 12 includes at least one axial protrusion 41, and the at least one axial protrusion 41 is configured to form the spacing base 40. It may be understood that the spacing base 40 includes the at least one axial protrusion 41, and each axial protrusion 41 extends in the axial direction of the brake motor 10. The motor end cover 111 is configured to fasten each axial protrusion 41, that is, the spacing base 40 is fastened relative to the housing 11, to limit fluttering of the bearing sleeve 30 in the radial direction of the brake motor 10 and guided sliding in the axial direction of the brake motor 10.

In an embodiment, the locking mechanism includes a parking motor 60. The parking motor 60 is configured to be in transmission connection to the driving piece 50, to drive the driving piece 50 to move in the axial direction of the brake motor 10.

In an embodiment, an outer circumferential surface of the motor end cover 111 or an outer circumferential surface of the stator sleeve 112 includes a radial boss 113. An extension direction of the radial boss 113 in the radial direction of the brake motor 10 is away from the motor shaft 14. The radial boss 113 is configured to fasten the parking motor 60, and the parking motor 60 is configured to drive the driving piece 50.

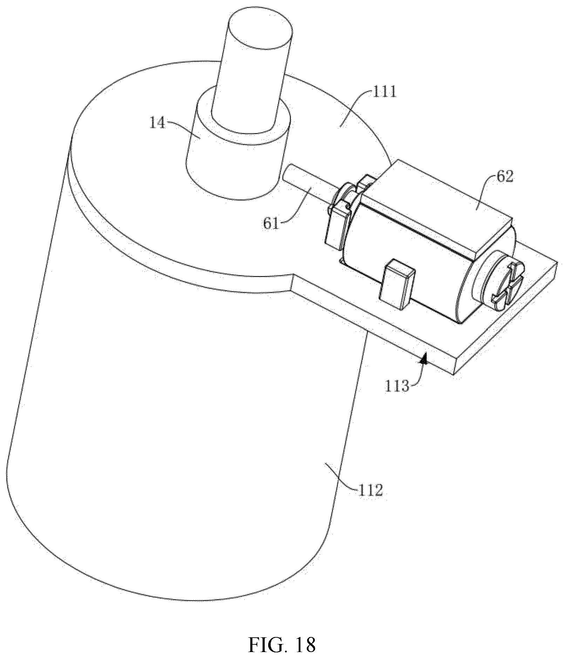

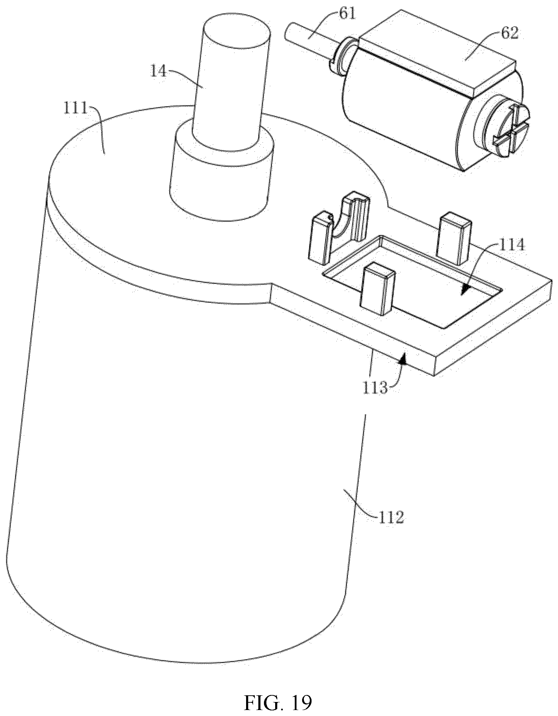

Specifically, refer to FIG. 18 and FIG. 19. In the diagram of FIG. 18, the outer circumferential surface of the motor end cover 111 is configured to form the radial boss 113. In addition, in the diagram of FIG. 18, an axial direction of the parking motor 60 is parallel to the radial direction of the brake motor 10. In other words, the axial direction of the parking motor 60 is perpendicular to the axial direction of the motor shaft 14. The parking motor 60 includes an output shaft 61, and an axial direction of the output shaft 61 is parallel to the axial direction of the parking motor 60. The parking motor 60 may be in transmission connection to the driving piece 50 via the output shaft 61, and drive the driving piece 50 to reciprocate in the axial direction of the brake motor 10, to drive, via the bearing sleeve 30, the one-way bearing 20 to slide between the first section 141 and the second section 142. Because the parking motor 60 is disposed in the radial direction of the brake motor 10, the axial size of the electro-mechanical brake apparatus 200 can be reduced.

For example, in this embodiment, the driving piece 50 may include a structure like a cam or a connecting rod, to convert a rotational motion of the output shaft 61 of the parking motor 60 in the radial direction of the brake motor 10 into a displacement motion in the axial direction of the brake motor 10, to drive the bearing sleeve 30 and the one-way bearing 20 to slide.

In an embodiment, the radial boss 113 includes an accommodating groove 114. The parking motor 60 includes a motor housing 62 and the output shaft 61. The output shaft 61 extends out of the motor housing 62 in the radial direction of the brake motor 10 and is configured to drive the driving piece 50. In the axial direction of the brake motor 10, a groove opening of the accommodating groove 114 faces the parking motor 60, and a sum of a groove depth of the accommodating groove 114 and a distance between the output shaft 61 and the motor end cover 111 is greater than or equal to a radius of the motor housing 62. In the radial direction of the brake motor 10, a length of the accommodating groove 114 is greater than or equal to a length of the motor housing 62.

The parking motor 60 also includes a stator and a rotor. For ease of description of an overall structure, the stator and the rotor are not shown in the figure. The motor housing 62 of the parking motor 60 is configured to accommodate the stator and the rotor. Therefore, a size of the motor housing 62 of the parking motor 60 is large. The sliding distance of the one-way bearing 20 in the axial direction of the brake motor 10 is small, and a volume of the driving piece 50 is also small. In a process in which the output shaft 61 of the parking motor 60 drives the one-way bearing 20 to slide via the driving piece 50, the distance between the output shaft 61 and the motor end cover 111 is correspondingly reduced.

In this embodiment, the accommodating groove 114 is disposed on the radial boss 113, and the accommodating groove 114 can accommodate a partial structure of the parking motor 60, so that the output shaft 61 of the parking motor 60 is close to the motor end cover 111 in the axial direction of the brake motor 10. In this way, space occupied by the parking motor 60 in the axial direction of the brake motor 10 is reduced. The one-way bearing 20 is also closer to the motor end cover 111 of the brake motor 10, and an internal structure of the electro-mechanical brake apparatus 200 is more compactly arranged and the axial size is smaller.

In an embodiment, the axial direction of the parking motor 60 is parallel to the axial direction of the brake motor 10, and the parking motor 60 and the brake motor 10 are located on a same side of the one-way bearing 20 in the axial direction of the brake motor 10. In this case, the output shaft 61 of the parking motor 60 passes through the radial boss 113 in the radial direction of the brake motor 10, and is in transmission connection to the driving piece 50.

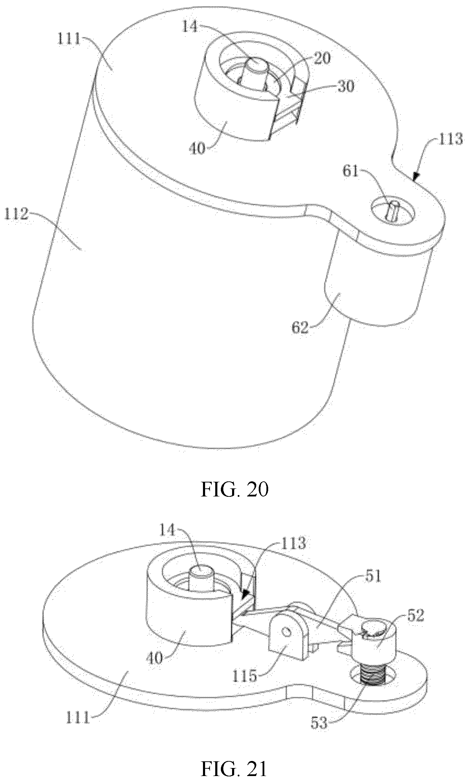

In this embodiment, the brake motor 10, the brake caliper 203, and the parking motor 60 are arranged in a "U" shape. As shown in FIG. 20, the parking motor 60 is arranged on one side of the housing 11 in the radial direction of the brake motor 10. The parking motor 60 and the stator sleeve 112 are adjacently arranged. In this case, the parking motor 60 is located on a side that is of the motor end cover 111 and that is away from the brake caliper 203, and a size of the parking motor 60 is usually less than a size of the brake motor 10. The parking motor 60 and the stator sleeve 112 are arranged in the radial direction of the brake motor 10, and the parking motor 60 does not occupy additional space in the axial direction of the brake motor 10. The one-way bearing 20 is also closer to the motor end cover 111 of the brake motor 10, and the internal structure of the electro-mechanical brake apparatus 200 is more compactly arranged and the axial size is smaller.

In an embodiment, the driving piece 50 includes a rotating member 51 and a nut 52, an extension direction of the rotating member 51 is parallel to the radial direction of the brake motor 10, and a middle section of the rotating member 51 is configured to rotatably connect to the housing of the brake motor 10. In the radial direction of the brake motor 10, a distance between the nut 52 and the bearing sleeve 30 is less than a length of the rotating member 51. The nut 52 is configured to be driven by the parking motor 60 to drive one end of the rotating member 51 to rotate, and the other end of the rotating member 51 is configured to drive, via the bearing sleeve 30, the one-way bearing 20 to slide.

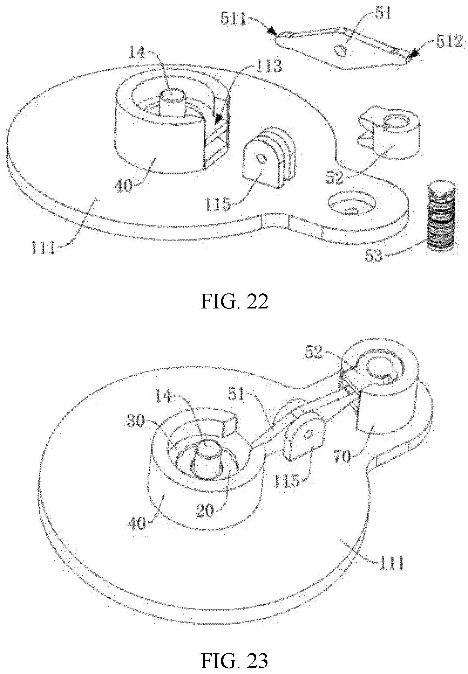

Refer to FIG. 21 and FIG. 22. The motor end cover 111 includes a support base 115. The support base 115 extends in the axial direction of the brake motor 10, and is arranged between the parking motor 60 and the motor shaft 14 in the radial direction of the brake motor 10. In this embodiment, the axial direction of the parking motor 60 is parallel to the axial direction of the brake motor 10.

In the radial direction of the brake motor 10, the rotating member 51 includes a first end 511 and a second end 512 that are opposite to each other. The first end 511 is close to the bearing sleeve 30, and the second end 512 is close to the nut 52. The middle section of the rotating member 51 is rotatably connected to the support base 115.

In an embodiment, the driving piece 50 may include a threaded spindle 53. One end of the threaded spindle 53 is configured to be in transmission connection to the output shaft 61 of the parking motor 60, and the other end of the threaded spindle 53 is configured to extend into an inner hole of the nut 52 and engage with the nut 52 for transmission. Therefore, the parking motor 60 drives the output shaft 61 to rotate, to drive the threaded spindle 53 to rotate synchronously. The nut 52 is engaged with the threaded spindle 53 for transmission to convert a rotational motion of the threaded spindle 53 into reciprocation in the axial direction of the brake motor 10, to drive the rotating member 51 to rotate around the support base 115.

Therefore, the driving piece 50 is driven by the parking motor 60 via the nut 52, and the bearing sleeve 30 is driven, via the rotating member 51, to slide in the axial direction of the brake motor 10. The nut 52 and the rotating member 51 are arranged in the radial direction of the brake motor 10, so that the axial size of the electro-mechanical brake apparatus 200 can be reduced.

It may be understood that the parking motor 60 drives the nut 52 to move up and down in the axial direction of the brake motor 10, to drive the second end 512 of the rotating member 51 to move up and down synchronously. The second end 512 rotates around the support base 115, to drive the first end 511 to rotate around the support base 115, and the first end 511 of the rotating member 51 may be configured to cooperate with the first radial protrusion 31 or the first radial groove 34 of the bearing sleeve 30, to drive the bearing sleeve 30 and the one-way bearing 20 to slide in the axial direction of the brake motor 10.

In an embodiment, an outer circumferential surface of the nut 52 includes a limiting bump 521, and the limiting bump 521 is configured to drive one end of the rotating member 51. Specifically, the limiting bump 521 extends toward the motor shaft 14 in a radial direction of the nut 52, and the limiting bump 521 is configured to drive the second end 512 of the rotating member 51. It may be understood that the second end 512 may cooperate with the nut 52 in a manner similar to that of the first end 511 and the first radial protrusion 31 or the first radial groove 34. In other words, the limiting bump 521 of the nut 52 is configured to accommodate the second end 512 or extend into the second end 512, to drive the second end 512 to reciprocate in the axial direction of the brake motor 10.

In an embodiment, the electro-mechanical brake apparatus 200 includes another spacing base. A radial length of the limiting bump 521 is greater than a distance between the another spacing base and the nut 52, and the nut 52 abuts against the another spacing base in a circumferential direction of the nut 52 via the limiting bump 521.

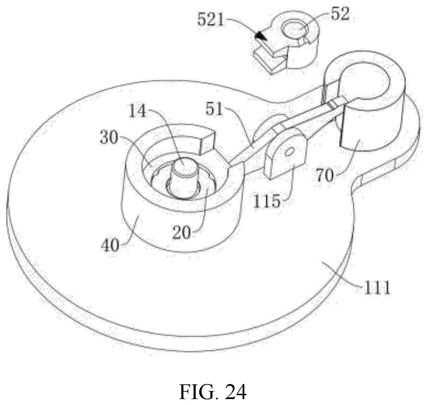

Specifically, refer to FIG. 23 and FIG. 24. The another spacing base is defined as a second spacing base 70. The second spacing base 70 is configured to limit an offset of the nut 52 in a radial direction of the parking motor 60, and is configured to limit rotation of the nut 52 in another direction via the limiting bump 521. In this way, it is ensured that the nut 52 smoothly reciprocates in the axial direction of the parking motor 60. Circumferential limiting and axial guiding are implemented between the second spacing base 70 and the nut 52 via a structure in the radial structure of the nut 52, to ensure that the nut 52 reliably drives the bearing sleeve 30, and reduce the axial size of the electro-mechanical brake apparatus 200.

Based on the foregoing embodiments, after the motor shaft 14 rotates in the one direction and drives the friction plate 202 to abut against the brake disc 1002, the electro-mechanical brake apparatus 200 in this application can limit reverse rotation of the motor shaft 14 via the one-way bearing, to implement the parking function. The bearing sleeve 30, the spacing base 40, and the driving piece 50 are all located on a side of the one-way bearing 20 in the radial direction of the brake motor 10, to compress the axial size of the electro-mechanical brake apparatus 200.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical brake apparatus, wherein the electro-mechanical brake apparatus comprises:
a brake motor, wherein a motor shaft of the brake motor is configured to rotate in one direction and drive a friction plate to brake, the motor shaft comprises a first section and a second section that are arranged in an axial direction, and a diameter of the first section is greater than a diameter of the second section;
a one-way bearing, wherein the one-way bearing is configured be coupled to an outer circumferential surface of the first section to limit rotation of the motor shaft in another direction, and the one direction is opposite to the another direction;
a bearing sleeve and a spacing base, wherein the bearing sleeve and the spacing base are sequentially arranged outside the one-way bearing in a radial direction of the brake motor, the bearing sleeve is configured to be fastened to the one-way bearing, and the spacing base is configured to limit an offset of the bearing sleeve in the radial direction of the brake motor, and is configured to limit, via the bearing sleeve, rotation of the one-way bearing in the another direction; and
a driving piece, wherein the driving piece is configured to drive, via the bearing sleeve, the one-way bearing to move from the first section to the second section or move from the second section to the first section.

2. The electro-mechanical brake apparatus according to claim 1, wherein an outer circumferential surface of the bearing sleeve comprises a radial protrusion, in the radial direction of the brake motor, a distance between the motor shaft and an end portion that is of the radial protrusion and that is away from the motor shaft is greater than a distance between the spacing base and the motor shaft, and the bearing sleeve is configured to abut against the spacing base via the radial protrusion in the another direction.

3. The electro-mechanical brake apparatus according to claim 2, wherein in the radial direction of the brake motor,
the distance between the motor shaft and the end portion that is of the radial protrusion and that is away from the motor shaft is greater than a distance between the driving piece and the motor shaft, and in the axial direction of the brake motor, two opposite surfaces of the radial protrusion are configured to abut against the driving piece, to be driven; or
an end face that is of the radial protrusion and that is away from the motor shaft comprises a radial groove, a distance between a groove opening of the radial groove and the motor shaft is greater than the distance between the driving piece and the motor shaft, and in the axial direction of the brake motor, two opposite groove walls of the radial groove are configured to abut against the driving piece, to be driven.

4. The electro-mechanical brake apparatus according to any one of claims 1 to 3, wherein in the radial direction of the brake motor,
an inner circumferential surface of the bearing sleeve comprises at least one of another radial protrusion or another radial groove, and the another radial protrusion or the another radial groove is configured to be embedded in or nest an outer circumferential surface of the one-way bearing, to limit rotation of the one-way bearing in a circumferential direction of the brake motor.

5. The electro-mechanical brake apparatus according to any one of claims 1 to 4, wherein a length of the bearing sleeve is greater than a length of the one-way bearing in the axial direction of the brake motor, the bearing sleeve extends from at least one end of the one-way bearing, and a part that is of the bearing sleeve and that extends out of the one-way bearing comprises at least one axial limiting block;
in the radial direction of the brake motor, the at least one axial limiting block extends toward the motor shaft, and a distance between each axial limiting block and the motor shaft is greater than or equal to a radius of an inner circumferential surface of the one-way bearing; and
in the axial direction of the brake motor, a surface that is of each axial limiting block and that faces the one-way bearing is configured to abut against and drive the one-way bearing to slide.

6. The electro-mechanical brake apparatus according to any one of claims 1 to 5, wherein the spacing base comprises at least one axial protrusion, and a length of each axial protrusion is greater than a length of the first section in the axial direction of the brake motor.

7. The electro-mechanical brake apparatus according to claim 6, wherein the spacing base comprises one axial protrusion, the axial protrusion is annular and sleeved on the outer circumferential surface of the bearing sleeve, and the axial protrusion comprises a notch;
in the circumferential direction of the brake motor, a width of the notch is greater than or equal to a width of the radial protrusion on the outer circumferential surface of the bearing sleeve, and is greater than or equal to a width of the driving piece; and
in the axial direction of the brake motor, a length of the notch is greater than a sum of a length of the radial protrusion and the length of the first section.

8. The electro-mechanical brake apparatus according to any one of claims 1 to 7, wherein a housing of the brake motor comprises a motor end cover;
in the axial direction of the brake motor, the motor end cover is arranged on a side of a stator of the brake motor, the motor shaft passes through a shaft hole of the motor end cover, and the one-way bearing is arranged on a side that is of the motor end cover and that is away from the stator; and
in the radial direction of the brake motor, a size of the spacing base is less than a size of the motor end cover.

9. The electro-mechanical brake apparatus according to claim 8, wherein the housing of the brake motor further comprises a stator sleeve, the stator sleeve is configured to fasten and accommodate the stator of the brake motor, an outer circumferential surface of the motor end cover or an outer circumferential surface of the stator sleeve comprises a radial boss, an extension direction of the radial boss is away from the motor shaft in the radial direction of the brake motor, the radial boss is configured to fasten a parking motor, and the parking motor is configured to drive the driving piece.

10. The electro-mechanical brake apparatus according to claim 9, wherein an axial direction of the parking motor is parallel to the axial direction of the brake motor;
in the radial direction of the brake motor, the parking motor and the stator sleeve are adjacently arranged; and
in the axial direction of the brake motor, a stator of the parking motor and the stator sleeve are located on a same side of the motor end cover, and an output shaft of the parking motor is configured to pass through the radial boss to drive the driving piece.

11. The electro-mechanical brake apparatus according to any one of claims 1 to 10, wherein the driving piece comprises a rotating member and a nut;
an extension direction of the rotating member is parallel to the radial direction of the brake motor, and a middle section of the rotating member is configured to rotatably connect to the housing of the brake motor; and
in the radial direction of the brake motor, a distance between the nut and the bearing sleeve is less than a length of the rotating member, the nut is configured to be driven by the parking motor to drive one end of the rotating member to rotate, and the other end of the rotating member is configured to drive, via the bearing sleeve, the one-way bearing to slide.

12. The electro-mechanical brake apparatus according to claim 11, wherein an outer circumferential surface of the nut comprises a limiting bump, and the electro-mechanical brake apparatus comprises another spacing base;
the limiting bump extends toward the motor shaft in a radial direction of the nut, and the limiting bump is configured to drive the one end of the rotating member; and
a radial length of the limiting bump is greater than a distance between the another spacing base and the nut, and the nut abuts against the another spacing base via the limiting bump in a circumferential direction of the nut.

13. The electro-mechanical brake apparatus according to any one of claims 1 to 12, wherein the inner circumferential surface of the one-way bearing comprises at least one groove, and each groove is configured to accommodate a movable member;
a groove depth of each groove gradually increases in the one direction; and
in the radial direction of the brake motor, a sum of a radial length of the movable member and a radius of the first section is less than a maximum groove depth of the groove, and is greater than or equal to a minimum groove depth of the groove.

14. The electro-mechanical brake apparatus according to claim 13, wherein the one-way bearing comprises at least one elastic member, each elastic member is elastically connected between the movable member and a groove wall of the groove in the another direction, and each elastic member is configured to drive the movable member to slide in the groove in the another direction.

15. A vehicle, comprising a wheel, a vehicle frame, and the electro-mechanical brake apparatus according to any one of claims 1 to 14, wherein
the axial direction of the brake motor in the electro-mechanical brake apparatus is parallel to an axis of the wheel, and the brake motor is configured to slidably connect to the vehicle frame in the axial direction;
the motor shaft in the electro-mechanical brake apparatus is configured to rotate in the one direction and drive the friction plate to slide in an axial direction of the wheel to abut against a brake disc; and
the one-way bearing in the electro-mechanical brake apparatus is configured to lock the friction plate.
